# EUROPEAN PATENT APPLICATION

(11) **EP 2 253 843 A1**
(43) Date of publication of application: **24.11.2010**
(21) Application number: 09160062.7
(22) Date of filing: 12.05.2009
(51) Int. Cl.: F03D 11/02, F16H 1/46

(54) **Wind turbine**

(71) Applicant: Ecotecnia Energias Renovables S.L., 08005 Barcelona (ES)
(72) Inventor: Castell Martínez, Daniel, 08960 Sant Just Desvern (Barcelona) (ES)
(74) Representative: ZBM Patents

(57) **Abstract**

A wind turbine comprising a hub (1) carrying one or more blades, a frame (2), and a planetary gearing for transmitting the torque of the hub (1), said hub (1) being rotatably mounted upon the frame (2) at or near a distal end thereof, **characterised in that**, the torque of the hub (1) is introduced into the planetary gearing through a planet carrier (4) of said gearing, said planet carrier (4) being located at or near said distal end of said frame (2).

## Description

The present invention relates to a drive train for a wind turbine and a wind turbine comprising such a drive train.

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox.

In the turbines using a gearbox, the rotation of a slow speed shaft (which commonly is the rotor shaft), is transformed through suitable gearing to rotation of a high speed shaft, which drives the generator. It is known to use planetary gearing (epicyclic gearing) in wind turbines for said speed increase. Planetary gearing systems are generally more complex than other gearing systems, but offer advantages such as a large speed increase in a relatively small volume, purely torsional reactions between gears and coaxial input and output shafts.

In most conventional wind turbines, the rotor hub is mounted on one end of the rotor shaft. The rotor shaft is rotatably mounted in a support structure within the nacelle on top of the wind turbine tower. This way, the rotor forms an overhanging structure which transmits torque to the gearbox, but additionally transmits cyclical bending loads due to the weight of the hub and blades.

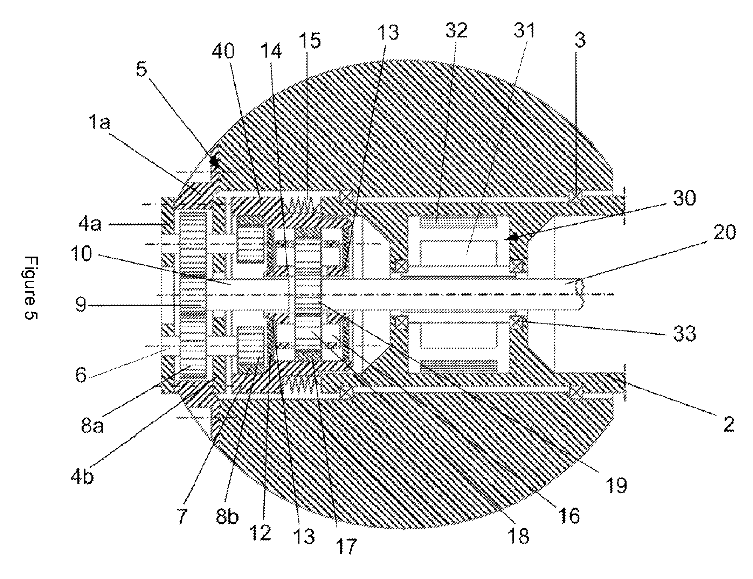

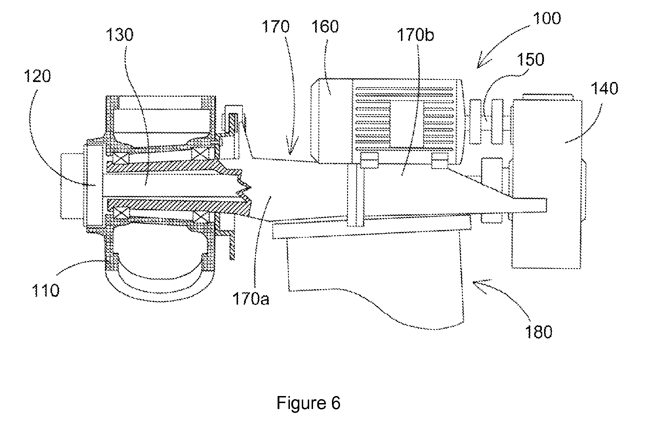

In order to solve this problem, it is known to provide a wind turbine tower with a forward extending frame, said frame being able to rotate along the longitudinal axis of the tower to follow a change in wind direction. The rotor hub with its plurality of blades is rotatably mounted upon said frame and a (flexible) coupling element is provided to couple the rotor hub with the rotor shaft located within said frame. Such a wind turbine has been schematically indicated in figure 6. In figure 6, a wind turbine 100 comprises a hub 110, which is rotatably mounted upon frame 170, at a distal end of said frame. Frame 170 is mounted upon tower 180. A coupling element 120 couples rotor shaft 130 to hub 110. The rotation of rotor shaft 130 is transformed with a gearbox 140 to a fast rotation of output shaft 150 which drives generator 160. In figure 5, frame 170 comprises a front part 170a and a rear part 170b.

With this kind of configuration comprising a hub mounted on a frame, the loads due to the weight of hub and blades are transmitted directly via the frame to the tower, whereas the rotor shaft only transmits torque to the gearbox (and/or generator).

In order to reduce the volume occupied by the drive train, it is known to provide the planetary gearing within said forward extending frame. US 6,459,165 discloses a wind turbine with a two-stage planetary gearing, in which the torque of the hub is transmitted to the first stage of the planetary gearing through an annular wheel directly connected to the rotor hub. WO 2007/082970 discloses a wind turbine with planetary gearing, in which the annular gear is formed integral with the hub of the wind turbine to transmit the torque of the hub to the planet gears. These prior art systems make the wind turbine drive train more compact and may have a nacelle of reduced size. This size reduction of the nacelle represents cost savings and weight savings at the top of the tower. However, since the hub is integrally formed or directly connected with the annular gear, installation of the gearing and repair of the planetary gearing become more complex.

There thus still exists a need for a wind turbine with an improved gearing system. The object of the present invention is to provide such a wind turbine with improved gearing systems which is relatively compact, but at least partly alleviates problems associated with previously mentioned prior art systems.

The object of the present invention is achieved by a wind turbine according to claim 1, namely by a wind turbine comprising a hub carrying one or more blades, a frame, and a planetary gearing for transmitting the torque of the hub, said hub being rotatably mounted upon the frame at or near a distal end thereof, wherein the torque of the hub is introduced into the planetary gearing through a planet carrier of said gearing, said planet carrier being located at or near said distal end of said frame.

The hub is rotatably mounted upon a frame. The torque of the hub is introduced into the planetary gearing through a planetary gearing which is located at or near a distal end of the frame. Firstly, this renders the drive train of the wind turbine compact and light, because the drive train comprises substantially no low speed shaft. Secondly, the configuration simplifies the installation and repair of the drive train elements, because the planet carrier of a planetary gearing is arranged aside the other gearing elements. This way, the element of the gearing in connection with the hub is axially arranged with respect to the other gearing elements (and not radially, as in some prior art solutions).

In some embodiments of the invention, said planet carrier is integrally formed with said hub. In other embodiments, said planet carrier is a separate component operatively connected with said hub. Forming the planet carrier integrally with the hub may lead to a lower weight of the hub - planet carrier assembly. Alternatively, the planet carrier may be a component directly attached at the hub or a component connected to the hub through one or more structural elements. This kind of arrangement may be easier to manufacture and at the moment of repair may make the gearing more easily accessible. It is furthermore desirable that unwanted deformations of the hub are not transmitted to the gearing so that the gearing may have an increased life-time. This can be achieved if the connection between said hub and said planet carrier comprises at least an elastic element, or if the static parts of the planetary gearing are flexibly coupled to said frame.

In some embodiments of the invention, said planetary gearing is a single stage planetary gearing, said single stage planetary gearing comprising a planet carrier carrying a plurality of planet gear wheels upon planet shafts, an annular gear and a central sun gear. In other embodiments, said planetary gearing comprises two or more stages, each stage of said planetary gearing comprising a planet carrier carrying a plurality of planet gear wheels upon planet shafts, an annular gear and a central sun gear. If a gearing comprises more stages, a higher speed of the output shaft may be achieved, which may lead to a smaller and cheaper generator. At the same time however, the cost of the gearing may increase.

Preferably, said planetary gearing transmits the torque of the hub to a generator, said generator being housed within said frame. In some preferred embodiments, the housing of the generator is integrally formed with said frame. Depending on its size, the generator with its own separate housing may be fitted within the frame. Alternatively, the housing of the generator may also advantageously be formed by the frame itself. By housing the generator within the frame, no other protection from weather influences would be needed. The size of the nacelle may thus be reduced or alternatively, with a same sized nacelle, more space is available in the nacelle for auxiliary systems.

In some embodiments, the planet shafts of at least one stage of the planetary gearing are cantilever supported in the planet carrier. Optionally, in said embodiments, said planet shafts of said at least one stage allow circumferential flexing. In further embodiments, the planet shafts of at least one stage of the planetary gearing are simply supported in the planet carrier. Gearings with cantilever mounted planet shafts may be more easily installed than gearings with simply supported planet shafts. Simply supported planet shafts may better secure proper meshing of the planet gears with the annular and sun gear. Depending on the number of planet gear wheels at a single stage of the planetary gearing, it may be beneficial to use cantilever supported planet shafts that allow circumferential flexing to improve load sharing between the planet gear wheels. For example, so-called Flexpins®, commercially available from e.g. The Timken Company® may be used. Alternatives may also be used. Within the scope of the present invention, at each stage, any number of planet gear wheels may be used.

In some embodiments, the planet carrier of at least one stage of planetary gearing carries a plurality of planet gear wheels, each planet gear wheel comprising a single gearing meshing both with the annular gear and sun gear of said stage. In further embodiments, the planet carrier of at least one stage of planetary gearing carries a plurality of planet gear wheels, each planet gear wheel comprising a double gearing of different radii, said double gearing comprising a first gearing meshing with the sun gear and a second gearing meshing with the annular gear. (This kind of planetary gearing is sometimes referred to as dual-ratio planetary gearing). The embodiments wherein each planet gear wheel comprises two gearings of different radii are more complex and may thus be more expensive. However, the speed increase from input shaft to output shaft that may be achieved in a single stage with such embodiments is higher, which may either lead to a smaller generator or to the gearing comprising less stages.

In some embodiments of the invention, said planetary gearing is substantially completely housed within said frame. The number of parts may thus be reduced as much as possible. In other embodiments of the invention, at least one stage of said planetary gearing is substantially completely housed within a support structure, arranged within hub and flexibly connected to said frame. This kind of arrangement may facilitate mounting and dismounting of the planetary gearing.

Within the scope of the present invention, the hub may be mounted on the frame through fluid bearings and/or through rolling element bearings. These types of bearings are well known in the art and the skilled person may select the appropriate bearings in accordance with the circumstances.

Particular embodiments of the present invention will be described in the following, only by way of non-limiting example, with reference to the appended drawings, in which:
Figure 1 is a schematic view of a first embodiment of a wind turbine according to the present invention;
Figure 2 is a schematic view of a second embodiment of a wind turbine according to the present invention;
Figure 3 is a schematic view of a third embodiment of a wind turbine according to the present invention;
Figure 4 is a schematic view of a fourth embodiment of a wind turbine according to the present invention;
Figure 5 is a schematic view of a fifth embodiment of a wind turbine according to the present invention;
Figure 6 is a schematic view of a prior art wind turbine configuration;

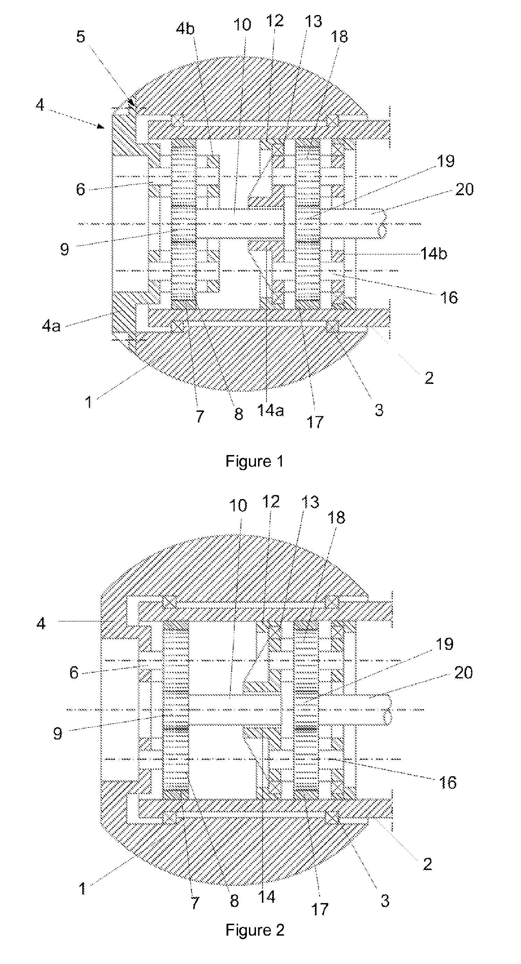

Figure 1 shows a schematic view of a first embodiment of a wind turbine according to the present invention. Hub 1 is rotatably mounted on frame 2 through bearings 3. Hub 1 may comprise one or more blades. Frame 2 is not shown in its entirety in figure 1. Rather only the part of the frame extending away from the wind turbine tower (not shown) is shown.

Within the scope of the present invention, the rotor hub with blades may be located downwind or upwind of the tower. The rotor hub is rotatably mounted upon a frame that extends away (either downwind or upwind) from the wind turbine tower. The hub is mounted at or near a distal end of said frame. The planet carrier 4 that transmits the torque of the hub into the planetary gearing is also located at or near said distal end of the frame 2, i.e. at or near the end of the frame where the hub is located. Preferably, the frame 2 is rotatably mounted with respect to the tower (not shown), such that the rotor can remain in the wind direction, regardless of the instantaneous wind direction.

In the embodiment of figure 1, planet carrier 4 of a first stage of a planetary gearing is attached to hub 1. The hub 1 may be connected to the planet carrier 4 at various connection points 5 around the circumference of the hub. The connection may be formed by simple fasteners such as screws or bolts. This may be a relatively cheap solution. Alternatively, the connections may comprise at least one elastic element, such as a flexible bushing. Such flexible elements can ensure that unwanted movements and deformations of the hub are not transmitted to the gearing. Other elastic elements that may be used for connecting the hub to the planet carrier are elastomer elements, or sandwich constructions of elastomer and metallic layers, such as commercially available from ESM GmbH ®. In this kind of arrangement, the most preferred connections between hub and planet carrier only transmit axial torque.

As a further alternative, the coupling between the hub and planet carrier may be relatively stiff and instead the coupling between the planetary gearing and the frame 2 may be flexible. If the coupling between the static parts of the planetary gearing and frame 2 (such as where first stage annular gear 7 and second stage annular gear 17 are connected to the frame) is made flexible, bending loads are not transmitted to the gearing, only to the frame (and wind turbine tower).

An advantage of the planet carrier 4 being a separate element from the hub 1 is that, if it is necessary for maintenance purposes, the planet carrier may simply be removed from the hub, allowing easy access to the remainder of the gearing.

In the embodiment of figure 1, planet shafts 6 carried by planet carrier 4 are simply supported: both ends of the planet shafts are rotatably supported within the planet carrier. Planet carrier 4 may be one integral element or may be formed with a first part 4a and a second part 4b connected to each other. Annular gear 7 is arranged around planet gear wheels 8 and is static in operation. The torque of the hub 1 is in this way transmitted from the planet carrier 4 to sun gear 9 mounted on output shaft 10 of the first stage.

In the embodiment of figure 1, the planetary gearing comprises a second stage comprising planet carrier 14 carrying a plurality of planet gear wheels 18 upon planet shafts 16. First stage output shaft 10 functions as input shaft for the second stage. The torque is transmitted through planet carrier 14. The planet carrier 14 in this embodiment is rotatably mounted through bearings 13 upon a suitably constructed support structure 12. Planet carrier 14 may also be formed of one integral element or separate elements 14a and 14b. Planet gear wheels 18 rotate within second stage annular gear 17, whereas second stage sun gear 19 is mounted upon second stage output shaft 20. Both stages of the planetary gearing in this embodiment comprise simply supported planet shafts.

As can be seen in figure 1, the object of the present invention is achieved. The drive train is relatively compact, and is even substantially completely housed within the frame. Additionally, repair and installation of gearing is still relatively easy.

Second stage output shaft may lead to a generator (not shown in figure 1). Within the scope of the present invention, it is possible that the gearing of the wind turbine consists of a single stage planetary gearing. Alternatively, the gearing may comprise a first stage planetary gearing and a second stage of parallel gearing. Further, the gearing may comprise more than two planetary gear stages, such as three. In general, if more stages of gearing are included, the speed increase of the output shaft that drives the generator, with respect to the input shaft (the planet carrier directly connected with or integrally formed with the hub) is higher. As a result the generator connected to the output shaft may be smaller. Optimizations of how many stages of gearing and/or which types of gearing are employed for e.g. the second and further stages may be determined by the skilled person in accordance with circumstances. The invention is not limited in this respect in any way.

Within the scope of the present invention, it is also possible that the output shaft of the last stage of the gearing (output shaft 20 in the embodiment of figure 1) does not drive a generator, but instead drives a mechanical drive such as a pump.

Figure 2 is a schematic view of a second embodiment of a wind turbine according to the present invention. The second embodiment shows some resemblances with the first embodiment and the same elements have therefore been indicated using the same reference signs. In the embodiment of figure 2, the planetary gearing is also substantially completely housed within frame 2 (just as in the embodiment of figure 1).

One important difference is that in the embodiment of figure 2, planet carrier 4 is integrally formed with hub 1. This may make the hub 1 more complex to manufacture but gives a more secure connection between hub 1 and planet carrier 4. Weight savings in the hub - planet carrier assembly may also be achieved with this configuration.

Another feature of the embodiment of figure 2, which was not shown in figure 1 is that the planet shafts 6 of the first stage are cantilever mounted in planet carrier 4: only one end of the planet shafts is rotatably supported in the planet carrier, the other end of the planet shaft is not supported. Compared to the alternative of simply supported planet shafts 6, the cantilever construction allows easier axial mounting of the planet gears and may reduce the weight of the planet carrier construction. In this embodiment, depending on the number of planet gear wheels, it may be beneficial if said planet shafts allow a certain circumferential flexing for improved load sharing between the planet gear wheels. In some embodiments, the planet shafts may be formed by so-called flexpins®. Alternatives for the flexpins may also be used. Within the scope of the present invention, any suitable number of planet gear wheels may be used in each stage.

In contrast to the embodiments shown in figure 1, the two stage planetary gearing thus comprises one stage wherein the planet shafts 6 are cantilever mounted and a second stage in which the planet shafts 16 are simply supported.

In some embodiments of the invention, the coupling between the planetary gearing and frame 2 (at annular gears 7 and 17) may be flexible, such that it can only transmit axial torque. This has the advantage that bending loads due to e.g. the weight of the rotor blades are transmitted only through frame 2 to the wind turbine tower. The skilled person will recognise that various flexible couplings may be suitable, e.g. couplings involving elastomer parts.

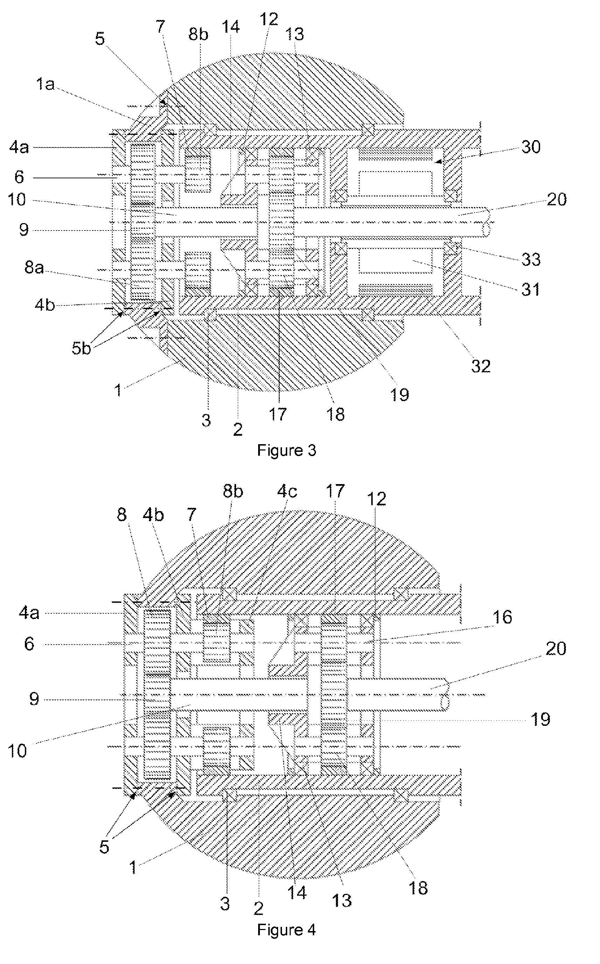

Figure 3 is a schematic view of a third embodiment of a wind turbine according to the present invention. The third embodiment shows some resemblances with the first and second embodiment and the same elements have therefore been indicated using the same reference signs.

In the embodiment shown in figure 3, the first stage of the planetary gearing comprises a plurality of gear wheels 8, in which each planet gear wheel comprises a double gearing 8a,8b of different radii. First gearing 8a and second gearing 8b form part of a single planet gear wheel. First gearing 8a meshes with sun gear 9 mounted upon first stage output shaft 10. Second gearing 8b meshes with annular gear 7. This configuration has the main advantage that a larger speed increase can be achieved within a single stage.

A further difference with the previously shown embodiments is that the hub 1 comprises an extension 1a, connected to the hub at various connection points 5. Planet carrier 4 is attached to the hub extension 1a at various connection points 5b and thus still operatively connected to the hub. Planet carrier 4 is also in this embodiment located near the distal end of frame 2. Optionally, either the connection points 5, 5b or the hub extension 1a comprises at least elastic elements, so that unwanted movements or deformations from the hub 1 are not transmitted into the gearing. In alternative embodiments, to achieve the same goal, the connection between the static parts of the planetary gearing (annular gears 7,17) and the frame are flexible. The shown configuration, with a separate element located between hub and planet carrier, simplifies the manufacture of the separate components while ensuring access to the gearing for maintenance.

Planet carrier 4 is formed in this embodiment by two separate elements 4a and 4b. One of the elements is located forward of the hub extension 1a and one located rearward of hub extension 1a. Planet shafts 6 of the first stage of planetary gearing are once again cantilever mounted. The planetary gearing further comprises a second stage, similar to the ones shown before. In alternative embodiments, this second stage may be eliminated since the speed increase achieved with the first stage is already sufficient.

Further shown in figure 3 is a generator 30. Generator rotor 31 is driven by second stage output shaft 20. The generator further comprises stator 32. In the embodiment shown in figure 3, the housing of the generator 30 is integrally formed with frame 2. The number of parts may be advantageously reduced in this way. In alternative embodiments, the housing of the generator may be separate from the frame and it may be located within the frame or not. If the housing of the generator is located within the frame or integrally formed with the frame, no separate cover from weather influences (e.g. through the nacelle) is needed. This can save further space in the nacelle (in embodiments wherein a nacelle is provided).

In the embodiment shown in figure 4, same elements have been indicated with same reference signs. The first stage of the planetary gearing comprises planet gear wheels with double gearing 8a,8b also in this embodiment. The planet carrier 4 in this embodiment comprises two elements. In alternative embodiments, it is possible to manufacture the planet carrier 8 of three separate elements 4a, 4b and 4c.

In contrast to the embodiment of figure 3, the planet carrier is directly attached at hub 1, with no intermediate part. Further, planet shafts 6 are simply supported within the planet carrier.

Figure 5 shows yet another embodiment of a wind turbine according to the present invention. Same reference signs have been used to indicate same elements. The connection between the planet carrier 4 and the hub 1 with hub extension 1a is the same as the one shown in figure 3. Also the first stage of the planetary gearing is similar as the one shown in figure 3 in the sense that the planet shafts 6 are cantilever mounted and the planet gear wheels 8 comprise double gearing, first gearing 8a meshing with sun gear 9 and second gearing 8b meshing with annular gear 7. The rotation of the hub is transmitted to first stage output shaft 10.

First stage output shaft 10 serves as second stage input shaft and carries second stage planet carrier 14. Planet carrier 14 is rotatably mounted through bearings 13 in support structure 12. Planet gear wheels 18 mounted upon planet shafts 16 transmit the rotation to second stage sun gear 19 and second stage output shaft 20.

Second stage output shaft 20 is rotatably mounted through bearings 33 in the generator housing. Generator rotor 31 is driven by second stage output shaft 20. The generator housing is integrally formed with frame 2, upon which hub 1 is rotatably mounted through suitable bearings 3.

The most important difference between the configuration of figure 5 and the previous configurations shown is that substantially no part of the planetary gearing is mounted within frame 2, upon which hub 1 is rotatably mounted. Instead, the components of the second stage of the planetary gearing are mounted within a support structure 40 arranged within hub 1, forward of frame 2. An advantage of the arrangement with the forward support structure 40 is that both installation and maintenance of the planetary gearing is facilitated: easy access to the planetary gearing is ensured.

Support structure 40 may be connected to frame 2 through a flexible connection 15 which can only transmit axial torque. Examples of such a flexible connection may e.g. be an axially or radially arranged elastomer between support 40 and frame 2, or a connection through pins arranged in flexible bushings. Within the scope of the present invention, any other coupling may also be used. The advantage of a coupling 15 that only transmits torque is that support structure 40 and also the planetary gearing carry no substantial bending loads. All cyclical loads due to e.g. weight of the hub are transmitted only to frame 2. This may reduce the fatigue loads on the gearing and increase its life time.

Although in all embodiments of figures 1-5, the planetary gearing comprised the same second stage, within the scope of the present invention, further alternatives are possible. For example, also the second stage of the planetary gearing may or may not comprise cantilever mounted planet shafts 16. Also, the second stage of the planetary gearing may comprise two sets of gear wheels, one set meshing with the annular gear 17 and one set meshing with the sun gear 19.

The present invention is further not limited in any way to the kind of bearings used to rotatably mount the hub on the frame. Suitable fluid bearings, particularly hydrodynamic or hydrostatic bearings, may be employed. Alternatively, suitable rolling element bearings, such as roller bearings, double-tapered roller bearings, or ball bearings may also be used. The bearings may further be purely radial bearings or radial and axial bearings.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. Thus, it is intended that the scope of the present invention herein disclosed should not be limited by the particular disclosed embodiments described before, but should be determined only by a fair reading of the claims that follow.

## Claims

1. A wind turbine comprising a hub (1) carrying one or more blades, a frame (2), and a planetary gearing for transmitting the torque of the hub (1), said hub (1) being rotatably mounted upon the frame (2) at or near a distal end thereof, **characterised in that**,
the torque of the hub (1) is introduced into the planetary gearing through a planet carrier (4) of said gearing, said planet carrier (4) being located at or near said distal end of said frame (2).

2. A wind turbine according to claim 1, further **characterised in that** said planet carrier (4) is integrally formed with said hub (1).

3. A wind turbine according to claim 1, further **characterised in that** said planet carrier (4) is a separate component operatively connected with said hub.

4. A wind turbine according to claim 3, further **characterised in that** the connection (5, 5b) between said hub (1) and said planet carrier (4) comprises at least an elastic element, such that substantially only axial torque is transmitted to the planet carrier.

5. A wind turbine according to any of claims 1-3, further **characterised in that** the static parts of the planetary gearing are flexibly coupled to said frame (2).

6. A wind turbine according to any previous claim, further **characterised in that** said planetary gearing is a single stage planetary gearing, said single stage planetary gearing comprising a planet carrier (4) carrying a plurality of planet gear wheels (8) upon planet shafts (6), an annular gear (7) and a central sun gear (9).

7. A wind turbine according to any previous claim, further **characterised in that** said planetary gearing comprises two or more stages, each stage of said planetary gearing comprising a planet carrier (4, 14) carrying a plurality of planet gear wheels (8, 18) upon planet shafts (6, 16), an annular gear (7, 17) and a central sun gear (9, 19).

8. A wind turbine according to any previous claim, further **characterised in that** said planetary gearing transmits the torque of the hub (1) to a generator (30), said generator (30) being housed within said frame (2).

9. A wind turbine according to claim 8, further **characterised in that** the housing of the generator (30) is integrally formed with said frame (2).

10. A wind turbine according to any previous claim, further **characterised in that** the planet shafts (6, 16) of at least one stage of the planetary gearing are cantilever supported in the planet carrier (4, 14).

11. A wind turbine according to claim 10, further **characterised in that** said planet shafts (6, 16) of said at least one stage allow circumferential flexing.

12. A wind turbine according to any of claims 1-9, further **characterised in that** the planet shafts (6, 16) of at least one stage of the planetary gearing are simply supported in the planet carrier.

13. A wind turbine according to any previous claim, further **characterised in that** the planet carrier (4, 14) of at least one stage of the planetary gearing carries a plurality of planet gear wheels (8, 18), each planet gear wheel (8, 18) comprising a single gearing meshing both with the annular gear (7, 17) and sun gear (9, 19) of said stage.

14. A wind turbine according to any of claims 1-12, further **characterised in that** the planet carrier of at least one stage of the planetary gearing carries a plurality of planet gear wheels (8a, 8b), each planet gear wheel (8a,8b) comprising a double gearing of different radii, a first gearing (8a) meshing with the sun gear (9) and a second gearing (8b) meshing with the annular gear (7).

15. A wind turbine according to any of claims 10-14, further **characterised in that** said at least one stage of planetary gearing is the first stage of said planetary gearing.

16. A wind turbine according to any previous claim, further **characterised in that** said planetary gearing is substantially completely housed within said frame (2).

17. A wind turbine according to any previous claim, further **characterised in that** at least one stage of said planetary gearing is substantially completely housed within a support structure (40), arranged within hub (1) and flexibly connected to said frame (2).

18. A wind turbine according to any previous claim, further **characterised in that** said hub (1) is rotatably mounted on said frame (2) through fluid and/or rolling element bearings.
